# EUROPEAN PATENT APPLICATION

(11) **EP 2 395 033 A1**
(43) Date of publication of application: **14.12.2011**
(21) Application number: 10789289.5
(22) Date of filing: 01.04.2010
(51) Int. Cl.: C08F 290/04, C08F 4/40

(54) **AIR-DRYING POLYESTER (METH)ACRYLATE RESIN COMPOSITION, STRUCTURE AND METHOD FOR PROVIDING SAME**

(30) Priority: 18.06.2009 JP 2009145316
(71) Applicant: DIC Corporation, Tokyo 174-8520 (JP)
(72) Inventor: KANZAKI Mitsuyuki, Takaishi-shi Osaka 592-0001 (JP); UNE Fumiyoshi, Takaishi-shi Osaka 592-0001 (JP); YAMASAKI Rie, Takaishi-shi Osaka 592-0001 (JP); TAKIKAWA Yuko, Takaishi-shi Osaka 592-0001 (JP)
(74) Representative: Beckmann, Claus
(86) International application number: PCT/JP2010/056010
(87) International publication number: WO 2010/146912

(57) **Abstract**

An object of the present invention is to provide an air-drying polyester (meth)acrylate resin composition in a curing system of a ketone peroxide curing agent and a cobalt-based curing accelerator, the resin composition being used as a topcoat in the field of civil engineering and construction, and having such good properties as, when coated or stacked, being capable of forming a cured coating film with no bubbles remaining therein due to non-bubbling properties of suppressing the generation of bubbles in the course of the curing reaction and being free from problems related to room-temperature curability such as a retarded gelation time, even after being stored for about one month; a structure coated with the resin composition; and a method for applying the resin composition.

## Description

### Technical Field

The present invention relates to an air-drying polyester (meth)acrylate resin composition used as a topcoat in the field of civil engineering and construction and having good non-bubbling properties and room-temperature curability, a structure coated with the resin composition, and a method for applying the resin composition.

### Background Art

Hitherto, as a topcoat for a fiber reinforced plastic (FRP) waterproof layer, unsaturated polyester resins containing styrene monomer, and solvent-based acrylic urethane coatings have been generally used. Recently, in response to the requirements for environmental friendliness and the realization of low volatile organic compounds (VOC), research and development on topcoat resins that do not contain styrene monomer and coatings that do not contain volatile solvents has been actively conducted.

According to a known method, an acrylic monomer having a high boiling point is used instead of styrene monomer, and a polymer such as an epoxy acrylate resin, a polyester acrylate resin, or a urethane acrylate resin is dissolved, thereby achieving environmental friendliness and low VOC. These resins are cured at room temperature by using a ketone peroxide curing agent such as methyl ethyl ketone peroxide (hereinafter referred to as "MEKPO") and a cobalt-based curing accelerator composed of metal soap such as cobalt naphthenate in combination. However, this method is disadvantageous in that bubbles due to oxygen generated in the course of the curing reaction remain in cured products, i.e., in the resulting coating films.

As a method for suppressing the generation of the bubbles, the use of an organic peroxide other than MEKPO has been proposed (Patent Document 1). However, this method has a problem in that, for example, a special curing accelerator is necessary because of insufficient curability of the organic peroxide. Also, a method for suppressing the generation of the bubbles by adding a monoalkyl ether of an unsaturated dibasic acid (monomethyl maleate) to a resin composition has been proposed (Patent Document 2). However, this method has a problem in that a cobalt-based accelerator is deactivated during storage, the gelation time is retarded, and thus the resin composition is not cured at room temperature.

### Prior Art Documents

### Patent Documents

[Patent Document 1] Japanese Unexamined Patent Application Publication No. 54-41987
[Patent Document 2] Japanese Unexamined Patent Application Publication No. 60-94415

### Disclosure of Invention

### Problems to be Solved by the Invention

An object of the present invention is to provide an air-drying polyester (meth)acrylate resin composition in a curing system of a ketone peroxide curing agent and a cobalt-based curing accelerator, the resin composition being used as a topcoat in the field of civil engineering and construction, and having such good properties as, when coated or stacked, being capable of forming a cured coating film with no bubbles remaining therein due to non-bubbling properties of suppressing the generation of bubbles in the course of the curing reaction and being free from problems related to room-temperature curability such as a retarded gelation time, even after being stored for about one month; a structure coated with the resin composition; and a method for applying the resin composition.

### Means for Solving the Problems

As a result of intensive studies on the structures of air-drying polyester (meth)acrylate resins in a curing system of a ketone peroxide curing agent and a cobalt-based curing accelerator, the inventors of the present invention have found that the problems regarding the non-bubbling properties during curing and room-temperature curability after storage can be solved by using a specific polyester (meth)acrylate resin structure, and completed the present invention.

Specifically, the present invention relates to an air-drying polyester (meth)acrylate resin composition containing a polyester (meth)acrylate resin (A) having a structural unit derived from a cyclic aliphatic unsaturated dibasic acid and a structural unit derived from an ether bond-containing glycol; a (meth)acrylic monomer (B); and a cobalt-based curing accelerator (C), in which the resin (A) is obtained by using 5% by mole or more and less than 50% by mole of the cyclic aliphatic unsaturated dibasic acid in all dibasic acids and 1% by mole to 10% by mole of at least one unsaturated dibasic acid of maleic acid and maleic anhydride in all the dibasic acids.

### Advantages

According to the present invention, a polyester structure has a structural unit derived from a cyclic aliphatic unsaturated dibasic acid and a structural unit derived from an ether bond-containing glycol, the proportion of the cyclic aliphatic unsaturated dibasic acid in all dibasic acids is 5% by mole or more and less than 50% by mole, and at least one unsaturated dibasic acid of maleic acid and maleic anhydride is used in the polyester structure in an amount of 1% by mole to 10% by mole in all the dibasic acids. Accordingly, it is possible to provide a room-temperature-curable air-drying polyester (meth)acrylate resin composition having such good properties as, when coated or stacked, being capable of forming a cured coating film with no bubbles remaining therein due to good non-bubbling properties of suppressing the generation of bubbles in the course of the curing reaction and being free from problems related to room-temperature curability such as a retarded gelation time, even after being stored for about one month; a structure coated with the resin composition; and a coating method using the resin composition.

### Best Modes for Carrying Out the Invention

An air-drying polyester (meth)acrylate resin (A) in the present invention is a polyester resin having two or more (meth)acryloyl groups per molecule at the ends thereof, and a polyester (meth)acrylate resin having a structural unit derived from a cyclic aliphatic unsaturated dibasic acid and a structure derived from an ether bond-containing glycol. The term "air-drying" means that a specific functional group is introduced into the resin structure, whereby curing rapidly proceeds even in air without suffering from cure inhibition due to oxygen molecules. In the resin (A), the cyclic aliphatic unsaturated dibasic acid has this function. As for a method for producing the resin (A), the resin (A) is produced by preparing a polyester having a terminal functional group by a polycondensation reaction between dibasic acids containing a cyclic aliphatic unsaturated dibasic acid and a glycol containing an ether bond-containing glycol, and allowing a (meth)acryloyl compound having a functional group that reacts with the terminal functional group to react with the terminal functional group of the polyester.

In this case, as a dibasic acid component of the polyester structure, the proportion of the cyclic aliphatic unsaturated dibasic acid is 5% by mole or more and less than 50% by mole, and preferably in the range of 10% by mole to 45% by mole, and as another acid component, at least one saturated dibasic acid selected from aromatic dibasic acids, alicyclic dibasic acids, and aliphatic dibasic acids is used in an amount of 50% to 95% by mole, and preferably 45% to 89% by mole. As the other acid component, aromatic dibasic acids are preferably used. Unless the cyclic aliphatic unsaturated dibasic acid is used in an amount of 5% by mole or more and less than 50% by mole of all dibasic acid components, the resulting resin has a poor balance between air-drying properties and physical properties, which is not preferable. In addition, by using at least one unsaturated dibasic acid of maleic acid and maleic anhydride in an amount of 1% by mole to 10% by mole in all the dibasic acid components, the generation of bubbles during coating can be suppressed. If this amount exceeds 10% by mole, the resulting cured product has a poor tensile strength. The amount is preferably 1% to 8% by mole. Furthermore, the number-average molecular weight of the polyester (meth)acrylate resin (A) measured by gel permeation chromatography is preferably 500 to 3,000, and more preferably 500 to 2,000 on the polystyrene equivalent basis.

Examples of the (meth)acryloyl compound having a functional group that reacts with a terminal functional group of the air-drying polyester resin include glycidyl (meth)acrylate, unsaturated monobasic acid such as acrylic acid and methacrylic acid, and glycidyl esters thereof. Among these, glycidyl (meth)acrylate is preferable, and glycidyl methacrylate is particularly preferable.

The term "cyclic aliphatic unsaturated dibasic acid" also includes derivatives thereof, and the structure of the cyclic aliphatic unsaturated dibasic acid has two active hydrogen atoms. Examples of the cyclic aliphatic unsaturated dibasic acid include tetrahydrophthalic anhydride, endomethylenetetrahydrophthalic anhydride, methyltetrahydrophthalic anhydride (cis-3-methyl-4-cyclohexene-cis-1,2-dicarboxylic anhydride), a-terpinene-maleic anhydride adduct, and trans-piperylene-maleic anhydride adduct.

Examples of the aliphatic dibasic acid include oxalic acid, succinic acid, malonic acid, glutaric acid, adipic acid, sebacic acid, and 1,12-dodecanedioic acid. Examples of the alicyclic dibasic acid include hexahydrophthalic acid, hexahydrophthalic anhydride, hexahydroterephthalic acid, and hexahydroisophthalic acid.

As the unsaturated dibasic acid, at least one of maleic acid and maleic anhydride is used in an amount of 1% by mole to 10% by mole in all the dibasic acid components. However, fumaric acid, itaconic acid, itaconic anhydride, and the like may be used in combination so long as the effect of suppressing the generation of bubbles is not impaired. Derivatives such as dialkyl esters of these acids may also be used. The above unsaturated dibasic acid has a function of increasing the effect of suppressing the generation of bubbles, and preferably used in an amount of 1% by mole to 8% by mole.
Comparing an unsaturated group of an unsaturated dibasic acid with a methacryloyl group of glycidyl methacrylate, copolymerizability with an acrylic monomer is different. Copolymerizability between glycidyl methacrylate and an acrylic monomer is higher than copolymerizability between the unsaturated dibasic acid and an acrylic monomer. Accordingly, an amount exceeding 10% by mole of the unsaturated dibasic acid used is not preferable because physical properties in terms of tensile strength of the resulting cured product decrease.

Examples of the aromatic dibasic acid include phthalic anhydride, halogenated phthalic anhydride, orthophthalic acid, isophthalic acid, and terephthalic acid. Among these, phthalic anhydride is preferable.

Examples of the ether bond-containing glycol include ethylene glycol, diethylene glycol, triethylene glycol, polyethylene glycol, propylene glycol, dipropylene glycol, tripropylene glycol, and polypropylene glycol. Among these, for example, diethylene glycol, triethylene glycol, and polyethylene glycol are preferable. Glycols other than the above glycols may be used in combination. Examples of the other glycols include 2-methyl-1,3-propanediol, 1,3-butanediol, neopentyl glycol, hydrogenated bisphenol A, 1,4-butanediol, 1,6-hexanediol, adduct of bisphenol A and propylene oxide or ethylene oxide, 1,2,3,4-tetrahydroxybutane, glycerol, trimethylolpropane, 1,3-propanediol, 1,2-cyclohexane glycol, 1,3-cyclohexane glycol, 1,4-cyclohexane glycol, 1,4-cyclohexanedimethanol, paraxylene glycol, bicyclohexyl-4,4'-diol, 2,6-decalin glycol, and 2,7-decalin glycol.

The polyester (meth)acrylate resin (A) may be mixed with other resins such as epoxy (meth)acrylates, urethane (meth)acrylates, and other polyester (meth)acrylates so long as the advantages of the present invention are not impaired.

Examples of the (meth)acrylic monomer (B) include methyl acrylate, ethyl acrylate, n-butyl acrylate, isobutyl acrylate, t-butyl acrylate, 2-ethylhexyl acrylate, n-octyl acrylate, decyl acrylate, lauryl acrylate, stearyl acrylate, polycaprolactone acrylate, diethylene glycol monomethyl ether monoacrylate, dipropylene glycol monomethyl ether monoacrylate, 2-ethylhexylcarbitol acrylate, methyl methacrylate, ethyl methacrylate, n-butyl methacrylate, isobutyl methacrylate, t-butyl methacrylate, hexyl methacrylate, 2-ethylhexyl methacrylate, n-octyl methacrylate, decyl methacrylate, lauryl methacrylate, stearyl methacrylate, polycaprolactone methacrylate, diethylene glycol monomethyl ether monomethacrylate, dipropylene glycol monomethyl ether monomethacrylate, 2-ethylhexylcarbitol methacrylate, phenoxyethyl acrylate, phenol ethylene oxide (EO)-modified acrylate, nonylphenylcarbitol acrylate, nonylphenol EO-modified acrylate, phenoxypropyl acrylate, phenol propylene oxide (PO)-modified acrylate, nonylphenoxy propyl acrylate, nonylphenol PO-modified acrylate, acryloyloxyethyl phthalate, phenoxyethyl methacrylate, phenol EO-modified methacrylate, nonylphenylcarbitol methacrylate, nonylphenol EO-modified methacrylate, phenoxypropyl methacrylate, phenol PO-modified methacrylate, nonylphenoxy propyl methacrylate, nonylphenol PO-modified methacrylate, methacryloyloxy ethyl phthalate, dicyclopentenyloxyethyl (meth)acrylate, and 2-hydroxyethyl (meth)acrylate. Among these, phenoxyethyl (meth)acrylate, dicyclopentenyloxyethyl (meth)acrylate, and dicyclopentenyloxyethyl acrylate which have a molecular weight of 180 or more and which have a property of not being easily volatilized, and 2-hydroxyethyl (meth)acrylate which has a hydrogen bond and which has a property of not being easily volatized are preferable because even if a slight amount of any of these compounds remains in a coating film in an unreacted state, it does not easily form total volatile organic compounds (TVOC). Furthermore, for example, styrene, vinyl acetate, vinyltoluene, and a-methyl toluene may be used in combination so long as the advantages are not impaired.

In addition, a monomer having at least two ethylenically unsaturated groups per molecule may be used in combination with the (meth)acrylic monomer (B) so long as the advantages of the present invention are not impaired.
By using this monomer in combination, abrasion resistance, scratch resistance, agitation resistance, chemical resistance, and the like of the surfaces of cured products can be improved. Examples of the monomer having at least two ethylenically unsaturated groups per molecule include alkanediol di(meth)acrylates such as ethylene glycol di(meth)acrylate, 1,2-propylene glycol di(meth)acrylate, 1,3-butylene glycol di(meth)acrylate, and 1,6-hexanediol di(meth)acrylate; dipropylene glycol di(meth)acrylate; triethylene glycol di(meth)acrylate; tetraethylene glycol di(meth)acrylate; and polyoxyalkylene glycol di(meth)acrylates such as polyethylene glycol di(meth)acrylate. These may be used alone or in combination of two or more.
Furthermore, divinylbenzene, diallyl phthalate, diallyl isophthalate, diallyl tetrabromophthalate, triallyl phthalate, and the like may also be used so long as the advantages of the present invention are not impaired.

The resin composition of the present invention contains a cobalt soap as the cobalt-based curing accelerator (C). Examples of this cobalt soap include cobalt naphthenate and cobalt octoate.
The amount of curing accelerator (C) added is preferably 0.01 to 5 parts by mass in the resin composition containing the (A) and the (B) described above. If the amount is outside this range, long-term storage stability is not achieved. This curing accelerator is added to the resin composition in advance.

Furthermore, curing accelerators other than cobalt-based curing accelerators may also be added so long as the advantages of the present invention are not impaired. Examples of the curing accelerators include metal soaps such as zinc octoate, vanadium octoate, copper naphthenate, and barium naphthenate; metal chelates such as vanadium acetylacetate, cobalt acetylacetate, and iron acetylacetonate; and amines including N,N-substituted anilines, N,N-substituted-p-toluidine, and 4-(N,N-substituted amino)benzaldehyde, e.g., as aniline, N,N-dimethylaniline, N,N-diethylaniline, p-toluidine, N,N-dimethyl-p-toluidine, N,N-bis(2-hydroxyethyl)-p-toluidine, 4-(N,N-dimethylamino)benzaldehyde, 4-[N,N-bis(2-hydroxyethyl)amino]benzaldehyde, 4-(N-methyl-N-hydroxyethyl amino)benzaldehyde, N,N-bis(2-hydroxypropyl)-p-toluidine, N-ethyl-m-toluidine, triethanolamine, m-toluidine, diethylenetriamine, pyridine, phenylmorpholine, piperidine, N,N-bis(hydroxyethyl)aniline, and diethanolaniline. Among these, amines and metal soaps are preferable. These curing accelerators may be used alone or in combination of two or more.

In using the resin composition of the present invention, a ketone peroxide curing agent (D) is added to the resin composition in order to cure the resin composition at room temperature. The amount of ketone peroxide curing agent (D) used is preferably 0.1 to 6 parts by mass based on 100 parts by mass of the total amount of the resin composition. The curing agent (D) is preferably methyl ethyl ketone peroxide.

Furthermore, in order to adjust the curing rate, a radical curing agent other than the above curing agent (D), a photo-radical initiator, and a polymerization inhibitor may be used in the resin composition of the present invention so long as the advantages of the present invention are not impaired. Examples of the radical curing agent other than the (D) include organic peroxides. Specific examples thereof include publicly known organic peroxides such as diacyl peroxides, peroxy esters, hydroperoxides, dialkyl peroxides, peroxy ketals, alkyl peresters, and percarbonates. A specific example thereof is benzoyl peroxide.

Examples of the photo-radical initiator, i.e., photosensitizer include benzoin ethers such as benzoin alkyl ethers; benzophenones such as benzophenone, benzil, and methyl orthobenzoyl benzoate; acetophenones such as benzyl dimethyl ketal, 2,2-diethoxyacetophenone, 2-hydroxy-2-methylpropiophenone, 4-isopropyl-2-hydroxy-2-methylpropiophenone, and 1,1-dichloroacetophenone; and thioxanthones such as 2-chlorothioxanthone, 2-methylthioxanthone, and 2-isopropylthioxanthone.

Examples of the polymerization inhibitor include trihydrobenzene, toluhydroquinone, 14-naphthoquinone, parabenzoquinone, hydroquinone, benzoquinone, hydroquinone monomethyl ether, p-tert-butylcatechol, and 2,6-di-tert-butyl-4-methylphenol. Preferably, the polymerization inhibitor can be added to the resin composition in an amount of 10 to 1,000 ppm.

Furthermore, as a component that assists drying of a coating film, petroleum wax or synthetic wax, i.e., polyethylene wax, oxidized paraffin, alcohol-type wax, or the like may be added to the resin composition of the present invention.

In the resin composition of the present invention, in addition to the above components, various additives such as pigments, heat-shielding pigments, fillers, ultraviolet absorbers, thickeners, low-shrinking agents, antioxidants, plasticizers, aggregates, flame retardants, stabilizers, and reinforcing materials may be used.

Any pigment that is used in preparation of color coatings may be used as the pigments. Typical examples thereof include organic pigments such as carbon black, Phthalocyanine Blue, Phthalocyanine Green, and Quinacridone Red; extender pigments such as titanium oxide, iron oxide, Titanium Yellow, and Copper Chromium Black; and inorganic flaky pigments such as aluminum flakes and pearl mica.

As the heat-shielding pigment, a pigment having a solar reflectance in the wavelength range of 350 to 2,100 nm of 15% or more, the solar reflectance being defined in JIS A 5759, and having an L* value in the CIE1976L*a*b* color space of 30 or less and more preferably 24 or less may be added for the purpose of obtaining a heat-shielding property. Furthermore, it is also preferable to use a color pigment having a solar reflectance in the wavelength range of 350 to 2,100 nm of 12% or more, the solar reflectance being defined in JIS A 5759, and, if necessary, a white pigment in combination. Examples of color pigments that satisfy this condition include yellow pigments such as monoazo yellow (trade name: Hostaperm Yellow H3G, manufactured by Hoechst AG), red pigments such as iron oxide (trade name: Toda Color 120ED, manufactured by Toda Kogyo Corp.) and Quinacridone Red (trade name: Hostaperm Red E2B70, manufactured by Hoechst AG), blue pigments such as Phthalocyanine Blue (trade name: Cyanine Blue SPG-8, manufactured by DIC Corporation), and green pigments such as Phthalocyanine Green (trade name: Cyanine Green 5310, manufactured by Dainichiseika Color & Chemicals Mfg. Co., Ltd.). The resin composition of the present invention can be suitably used as a heat-shielding coating by adding the above heat-shielding pigment to the resin composition.

Examples of the filler include hydraulic silicate materials, a calcium carbonate powder, clay, an alumina powder, a silica stone powder, talc, barium sulfate, a silica powder, a glass powder, glass beads, mica, aluminum hydroxide, celluloses, silica sand, river sand, and crystalline limestone.

The resin composition of the present invention is good in terms of non-bubbling properties during curing and room-temperature curability. Therefore, the resin composition can be used in a method for coating an outdoor structure, and any civil engineering and construction structure can be used as the structure. Examples of the civil engineering and construction structure include floors, walls, ceilings, roads, pavements, pool floors, and rooftop floors. Furthermore, the resin composition of the present invention may be stacked on an FRP waterproof layer.

A coating method of the present invention is performed by adding a radical curing agent to the resin composition of the present invention, and conducting a coating operation such as spray coating, brush coating, or roll coating using the resin composition.

### EXAMPLES

The present invention will now be described in more detail by way of Examples. In the description below, "parts" and "%" represent "parts by mass" and "% by mass", respectively.

### EXAMPLES 1 to 5 (Preparation of resin compositions a1, a2, a3, a5, and a6)

Phthalic anhydride (PA), diethylene glycol (DEG), maleic anhydride (MA), and cis-3-methyl-4-cyclohexene-cis-1,2-dicarboxylic anhydride (PMAA) were charged to a four-necked flask equipped with a thermometer, a stirrer, an inert gas inlet, and a reflux condenser in the compositions shown in Table 1, and 0.05% by mass of dibutyltin oxide was added as an esterification catalyst thereto. The reaction mixture was allowed to react at 205°C. The reaction time at 205°C was two hours in Example 1, three hours in Example 2, two hours in Example 3, two hours in Example 4, and three hours in Example 5. The reaction mixture was then cooled to 140°C. Subsequently, a predetermined amount of glycidyl methacrylate (GMA) was charged thereto. The reaction mixture was allowed to react for three hours, and was then cooled to 60°C. Phenoxyethyl methacrylate (PhOEMA) was then charged as a (meth)acrylic monomer (B) thereto, thus preparing resin compositions. The amount of PhOEMA charged was 40% by mass in Examples 1 and 4, and 50% by mass in Examples 2, 3, and 5. The resin composition obtained in Example 1 is referred to as "composition a1". The resin composition obtained in Example 4 is referred to as "composition a5". The resin composition obtained in Example 2 is referred to as "composition a2". The resin composition obtained in Example 3 is referred to as "composition a3". The resin composition obtained in Example 5 is referred to as "composition a6".

### SYNTHESIS EXAMPLE 1 (Preparation of epoxy methacrylate resin (composition b))

To a four-necked flask equipped with a thermometer, a stirrer, an inert gas inlet, and a reflux condenser, 1,850 g of EPICLON 850 (manufactured by DIC Corporation) obtained by a reaction between bisphenol A and epichlorohydrin and having an epoxy equivalent of 185, 860 g of methacrylic acid, 1.36 g of hydroquinone, and 10.8 g of triethylamine were charged. The temperature of the reaction mixture was increased to 120°C. The reaction mixture was allowed to react at 120°C for 10 hours to obtain an epoxy acrylate having an acid value of 3.5. Phenoxyethyl methacrylate (PhOEMA) was charged thereto. Thus, an epoxy methacrylate resin was prepared. The amount of PhOEMA charged was 60% by mass. This resin is referred to as "composition b".

### COMPARATIVE EXAMPLE 1 (Preparation of resin composition a0)

Phthalic anhydride (PA), diethylene glycol (DEG), and cis-3-methyl-4-cyclohexene-cis-1,2-dicarboxylic anhydride (PMAA) were charged to a four-necked flask equipped with a thermometer, a stirrer, an inert gas inlet, and a reflux condenser without using maleic anhydride, and 0.05% by mass of dibutyltin oxide was added as an esterification catalyst thereto. The reaction mixture was allowed to react at 205°C. The reaction time at 205°C was two hours. The reaction mixture was then cooled to 140°C. Subsequently, a predetermined amount of glycidyl methacrylate (GMA) was charged thereto. The reaction mixture was allowed to react for three hours, and was then cooled to 60°C. Phenoxyethyl methacrylate (PhOEMA) was then charged as a (meth)acrylic monomer (B) thereto, thus preparing resin composition a0. The amount of PhOEMA charged was 40% by mass.

### COMPARATIVE EXAMPLE 2 (Preparation of resin composition a4)

Maleic anhydride (MA), phthalic anhydride (PA), diethylene glycol (DEG), and cis-3-methyl-4-cyclohexene-cis-1,2-dicarboxylic anhydride (PMAA) were charged to a four-necked flask equipped with a thermometer, a stirrer, an inert gas inlet, and a reflux condenser in the composition shown in Table 1, and 0.05% by mass of dibutyltin oxide was added as an esterification catalyst thereto. The reaction mixture was allowed to react at 205°C. The reaction time at 205°C was two hours. The reaction mixture was then cooled to 140°C. Subsequently, a predetermined amount of glycidyl methacrylate (GMA) was charged thereto. The reaction mixture was allowed to react for three hours, and was then cooled to 60°C. Phenoxyethyl methacrylate (PhOEMA) was then charged as a reactive monomer thereto, thus preparing resin composition a4. The amount of PhOEMA charged was 40% by mass.

### COMPARATIVE EXAMPLE 3

One part of monomethyl maleate was added as an additive to composition b prepared above. The presence of absence of bubbles and curability were evaluated.

### "Non-bubbling properties: Method for evaluating the presence or absence of bubbles during curing"

One hundred grams of a resin composition was placed in a 200-cc polycup, and the resin was cured under the composition and temperature conditions described below. The presence or absence of bubbles was visually observed until gelation occurred.
In the case where bubbles remained in the resin or on the liquid level in the polycup at the time of the gelation of the resin, the result of the bubbling is given as "present". In the case where bubbles did not remain, the result of the bubbling is given as "not present".

| (Composition) | |
|---|---|
| Resin composition: Each sample | 100 g |
| Curing accelerator: 8% Cobalt naphthenate | 1 g |
| Auxiliary accelerator: Acetylbutyrolactone | 0.05 g |
| Curing agent: 55% Methyl ethyl ketone peroxide | 1 g |

### "Method for evaluating room-temperature curability after addition of cobalt-based accelerator"

The method for measuring the gelation time was in accordance with JIS K6901 5.10.1 [Gelation time at room temperature (Method A)].
The gelation time was measured under the same conditions as the above composition and temperature conditions. After the curing accelerator and the auxiliary accelerator were blended, the gelation time was measured on the same day and after one month. The result measured on the same day and the result measured after one month were examined, and the degree of deactivation of the cobalt-based accelerator was evaluated.

"Physical properties of cured product: Method for measuring tensile strength"
A cast resin plate having a thickness of 3 mm was prepared. The plate was cured at room temperature for one day, and then subjected to post-curing at 80°C for six hours.

| (Composition) | |
|---|---|
| Resin: Each sample | 100 g |
| Curing accelerator: 8% Cobalt naphthenate | 1 g |
| Auxiliary accelerator: Acetylbutyrolactone | 0.05 g |
| Curing agent: 55% Methyl ethyl ketone peroxide | 1 g |

The tensile physical properties were measured by the method specified in JIS K7113 using a No. 1 dumbbell specimen.

**[Table 1]**

| Materials (mol) | | | Example 1 | Example 2 | Example 3 | Example 4 | Example 5 |
|---|---|---|---|---|---|---|---|
| Blending composition | | DEG | 12.0 | 12.0 | 12.0 | 12.0 | 12.0 |
| | | PA | 15.0 | 15.0 | 13.5 | 15.0 | 9.8 |
| | | MA | 0.6 | 1.0 | 1.5 | 0.3 | 0.3 |
| | | PMAA | 2.8 | 2.8 | 2.8 | 2.8 | 8.0 |
| | | GMA | 12.0 | 11.6 | 11.1 | 12.3 | 12.3 |
| | | Composition | a1 | a2 | a3 | a5 | a6 |
| | | Mass% of resin (A) | 60 | 50 | 50 | 60 | 50 |
| Monomer (B) (mass%) PhOEMA | | | 40 | 50 | 50 | 40 | 50 |
| Amount of MA of acid component (mol%) | | | 3 | 5 | 8 | 2 | 2 |
| Non-bubbling properties Presence or absence of bubbles during curing | | | Not present | Not present | Not present | Not present | Not present |
| Curability after addition of cobalt (JIS K6901 gelation time) | | | | | | | |
| | Blending/the same day | | 20 min | 20 min | 20 min | 20 min | 20 min |
| | Blending/after one month | | 20 min | 20 min | 20 min | 20 min | 20 min |
| Physical properties of cured product Tensile strength (MPa) JIS K7113 | | | 33.8 | 32.6 | 28.0 | 33.8 | 31.0 |

**[Table 2]**

| Materials (mol) | | | Comparative Example 1 | Comparative Example 2 | Comparative Example 3 |
|---|---|---|---|---|---|
| Blending composition | | DEG | 12.0 | 12.0 | - |
| | | PA | 15.0 | 12.3 | - |
| | | MA | - | 3.0 | - |
| | | PMAA | 2.8 | 2.8 | - |
| | | GMA | 12.6 | 9.6 | - |
| | | Composition (Percentage of resin component) | a0 (60) | a4 (60) | Composition b (40) |
| Monomer (B) (mass%) PhOEMA | | | 40 | 40 | 60 |
| Additive Monomethyl maleate | | | - | - | 1 |
| Amount of MA of acid component (mol%) | | | - | 17% | - |
| Non-bubbling properties Presence or absence of bubbles during curing | | | Present | Not present | Not present |
| Curability after addition of cobalt (JIS K6901 gelation time) | | | | | |
| | Blending/the same day | | 20 min | 30 min | 15 min |
| | Blending/after one month | | 20 min | 30 min | > 60 min |
| Physical product properties of cured (MPa) Tensile strength JIS K7113 | | | 30.8 | 22.0 | - |

### Note;

DEG: diethylene glycol
PA: phthalic anhydride
MA: maleic anhydride
PMAA: cis-3-methyl-4-cyclohexene-cis-1,2-dicarboxylic anhydride (methyltetrahydrophthalic anhydride)
GMA: glycidyl methacrylate
PhOEMA: phenoxyethyl methacrylate

In Comparative Example 1 where maleic anhydride was not used, although the cured product had a satisfactory tensile strength, bubbles were generated in the coating film. In Comparative Example 2, more than 10% by mole of maleic anhydride was used in the polyester, and thus room-temperature curability decreased and the tensile strength decreased. In the epoxy acrylate resin of Comparative Example 3, room-temperature curability after storage decreased.

### EXAMPLE 6

A urethane primer (PLYADECK T-150-35DNX) manufactured by DIC Corporation was applied onto a concrete base in an amount of 0.2 kg/m² and dried. Subsequently, 1.0% of 55%-methyl ethyl ketone peroxide serving as a curing agent was mixed with a methacrylic resin (DIOVAR NS-313TM) manufactured by DIC Corporation. The mixture was applied onto the primer with a brush and was impregnated into a waterproofing glass mat #450, and degassed to form an FRP waterproof layer. The FRP waterproof layer was cured and dried within about 60 minutes after the impregnation and degassing. A gray topcoat composition shown in Example 6 of Table 3 was applied onto the FRP waterproof layer with a brush in a composition described below so as to have a thickness of 0.3 kg/m². An outdoor exposure test was conducted, and the surface temperature was measured. The results are shown in Tables 4 and 5.

| (Composition) | |
|---|---|
| Topcoat composition: Example 3 | 100 g |
| Curing accelerator: 8% Cobalt naphthenate | 1 g |
| Auxiliary accelerator: Acetylbutyrolactone | 0.05 g |
| Curing agent: 55% Methyl ethyl ketone peroxide | 1 g |

### COMPARATIVE EXAMPLE 4

The urethane primer and the methacrylic resin were applied onto a concrete base as in Example 6. Subsequently, a gray topcoat composition shown in Comparative Example 4 of Table 3 was applied thereon with a brush in a composition described below so as to have a thickness of 0.3 kg/m². An outdoor exposure test was conducted, and the surface temperature was measured. The results are shown in Tables 4 and 5.

| (Composition) | |
|---|---|
| Topcoat composition: Comparative Example 4 | 100 g |
| Curing accelerator: 8% Cobalt naphthenate | 1 g |
| Auxiliary accelerator: Acetylbutyrolactone | 0.05 g |
| Curing agent: 55% Methyl ethyl ketone peroxide | 1 g |

**[Table 3]**

| Name of pigment (Name of manufacturer) | Blending ratio of topcoat composition | |
|---|---|---|
| | Example 6 | Comparative Example 4 |
| Daipyroxide Brown 9290 (Dainichiseika Color & Chemicals Mfg. Co., Ltd.) | 5.0 | - |
| Hostaperm Yellow H3G (Hoechst AG) | 6.0 | - |
| Cyanine Blue SPG-8 (DIC Corporation) | 0.1 | - |
| Thermal carbon (Asahi Thermal Co., Ltd.) | - | 1.5 |
| TIPAQUE CR-90 (Ishihara Titanium) | 20.0 | 20.0 |
| Resin composition a1 | 68.9 | 78.5 |
| Total | 100.0 | 100.0 |

### <Measurement of surface temperature>

Measuring method: Non-contact infrared surface thermometer (manufactured by Raytek Corporation)
Place: DIC Corporation Sakai Plant, Outdoor exposure field
Date and time: Measured on June 12, 2009, and measured on July 23, 2009

**[Table 4]**

| Measurement date and time June 12^{th} | Air temperature (under solar radiation) | Surface temperature | |
|---|---|---|---|
| | | Example 6 | Comparative Example 4 |
| 12:00 | 34°C | 34.0°C | 38.0°C |
| 14:00 | 35°C | 36.0°C | 42.5°C |
| 16:00 | 33°C | 33.5°C | 37.5°C |

**[Table 5]**

| Measurement date and time July 23rd | Air temperature (under solar radiation) | Surface temperature | |
|---|---|---|---|
| | | Example 6 | Comparative Example 4 |
| 12:00 | 36°C | 42.0°C | 48.5°C |
| 14:00 | 37°C | 46.5°C | 51.0°C |
| 16:00 | 34°C | 41.0°C | 45.5°C |

Referring to the results of Example 6 and Comparative Example 4, it was found that the application of a heat-shielding coating resulted in a difference in surface temperature of about 4°C to 7.

## Claims

1. An air-drying polyester (meth)acrylate resin composition comprising a polyester (meth)acrylate resin (A) having a structural unit derived from a cyclic aliphatic unsaturated dibasic acid and a structural unit derived from an ether bond-containing glycol; a (meth)acrylic monomer (B); and a cobalt-based curing accelerator (C),
wherein the polyester (meth)acrylate resin (A) is obtained by using 5% by mole or more and less than 50% by mole of a cyclic aliphatic unsaturated dibasic acid (A1) in all dibasic acids and 1% by mole to 10% by mole of at least one unsaturated dibasic acid (A2) of maleic acid and maleic anhydride in all the dibasic acids.

2. The air-drying polyester (meth)acrylate resin composition according to Claim 1, wherein the polyester (meth)acrylate resin (A) is obtained by using dibasic acids including 10% to 45% by mole of the cyclic aliphatic unsaturated dibasic acid (A1), 1% to 10% by mole of the unsaturated dibasic acid (A2), and 45% to 89% by mole of a saturated dibasic acid (A3).

3. The air-drying polyester (meth)acrylate resin composition according to Claim 1, wherein a ketone peroxide curing agent is further used as a curing agent (D).

4. The air-drying polyester (meth)acrylate resin composition according to Claim 1, wherein the (meth)acrylic monomer (B) is phenoxymethyl methacrylate.

5. The air-drying polyester (meth)acrylate resin composition according to Claim 1, wherein the content of the polyester (meth)acrylate resin (A) is 60% to 30% by mass, and the content of the (meth)acrylic monomer (B) is 40% to 70% by mass.

6. A structure coated with the air-drying polyester (meth)acrylate resin composition according to any one of Claims 1 to 3.

7. A coating method comprising adding a curing agent to the air-drying polyester (meth)acrylate resin composition according to any one of Claims 1 to 3, and coating a civil engineering and construction structure with the resin composition.
